# EUROPEAN PATENT APPLICATION

(11) **EP 4 607 322 A1**
(43) Date of publication of application: **27.08.2025**
(21) Application number: 24216677.5
(22) Date of filing: 29.11.2024
(51) Int. Cl.: G06F 3/01

(54) **HEAD-WORN DISPLAYS WITH MULTI-STATE PANELS**

(30) Priority: 23.02.2024 US 202418585975
(71) Applicant: Meta Platforms Technologies, LLC, Menlo Park, CA 94025 (US)
(72) Inventor: Balsam, Nava K., Menlo Park (US); Carmean, Douglas, Menlo Park (US); Wheelwright, Brian, Menlo Park (US); Valentine, Gareth John, Menlo Park (US); Atlas, Charlene Mary, Menlo Park (US); Norpchen, Lars, Menlo Park (US); Lin, Shu-You, Menlo Park (US); Kunz, William, Menlo Park (US); Bader, Eric, Menlo Park (US); Wu, Xi, Menlo Park (US)
(74) Representative: Murgitroyd & Company

(57) **Abstract**

Aspects of the present disclosure integrate pixelated multi-state panels (e.g., liquid crystal dimming panels) into artificial reality (XR) displays (e.g., augmented reality (AR) glasses) or conventional glasses. Conventional visual displays for XR displays can be expensive, have a low field-of-view, and consume high power. On the other hand, pixelated multi-state panels consume lower power, have a wide field-of-view, and are light, inexpensive, and computationally simple. The multi-state panels can have 4 configurations: 1) included on the periphery of an XR display, 2) as a standalone display, 3) as a display that's overlaid onto an XR display, and/or 4) as a secondary externally facing display. The multi-state panels can be selectively activated based on a trigger, such as identification of an object in the real-world environment, based on an event occurring in an XR application executing on the XR display, based on detected audio, etc.

## Description

### TECHNICAL FIELD

The present disclosure is directed to pixelated multi-state panels that supplement artificial reality (XR) displays or that are included on conventional glasses.

### BACKGROUND

Artificial reality (XR) devices are becoming more prevalent. As they become more popular, the applications implemented on such devices are becoming more sophisticated. Mixed reality (MR) and augmented reality (AR) applications can provide interactive three-dimensional (3D) experiences that combine images of the real-world with virtual objects, while virtual reality (VR) applications can provide an entirely self-contained 3D computer environment. For example, an MR or AR application can be used to superimpose virtual objects over a real scene that is observed by a camera. A real-world user in the scene can then make gestures captured by the camera that can provide interactivity between the real-world user and the virtual objects. AR, MR, and VR (together XR) experiences can be observed by a user through a head-mounted display (HMD), such as glasses or a headset. An HMD can have a pass-through display, which allows light from the real-world to pass through a lens to combine with light from a waveguide that simultaneously emits light from a projector in the HMD, allowing the HMD to present virtual objects intermixed with real objects the user can actually see.

### SUMMARY

According to a first aspect of the invention, there is provided a method for selectively controlling one or more pixelated multi-state panels on a head-worn display, the method comprising: providing a pass-through view of a real-world environment to a user through lenses of the head-worn display, wherein the lenses are at least partially covered by the one or more pixelated multi-state panels, wherein the one or more pixelated multi-state panels are configured to have at least a partially transparent state, wherein the one or more pixelated multi-state panels each include an array of pixels, and wherein each pixel, within the array of pixels, is independently controllable for brightness based on application of an electric current; identifying a contextual trigger; and based on the identified contextual trigger, selectively dimming light by at least one of the one or more pixelated multi-state panels by controlling the electric current being applied to a set of pixels within the array of pixels, thereby dimming light in at least a portion of the pass-through view of the real-world environment on the head-worn display.

In some embodiments, identifying the contextual trigger includes identifying an object, in the real-world environment, by applying object recognition to one or more images, of the real-world environment, captured by the head-worn display.

In some embodiments, the at least one of the one or more multi-state panels is selectively dimmed relative to a location of the identified object in the real-world environment as viewed on the head-worn display.

In some embodiments, the method further comprises: providing a signal to the at least one of one or more pixelated multi-state panels that causes the set of pixels, corresponding to a location determined for the user to gaze at, to activate.

In some embodiments, the head-worn display is an artificial reality head-mounted display configured to apply lighting effects to the lenses to render an artificial reality environment, and the selectively dimming light at the at least one of the one or more pixelated multi-state panels is further based on deactivation of the lighting effects applied to the lenses by the artificial reality head-mounted display.

In some embodiments, the head-worn display is configured to communicate over a network via a communications interface, and the contextual trigger is a notification received by the head-worn display over the network via the communications interface.

In some embodiments, the contextual trigger is a matching of an audio signal, captured by the head-worn display, to a defined audio pattern.

In some embodiments, the one or more pixelated multi-state panels are pixelated dimming panels, identifying the contextual trigger includes identifying an area of brightness, on the head-worn display, above a threshold, and the selectively dimming the light in at least the portion of the pass-through view includes dimming the identified area of brightness.

In some embodiments, the head-worn display is an artificial reality head-mounted display including a primary display, configured to render an artificial reality environment to the lenses, the primary display being at least partially covered by the one or more multi-state panels.

In some embodiments, the method further comprises: mapping the identified contextual trigger to a user interface element, wherein the selectively dimming light in at least the portion of the pass-through view includes the user interface element.

In some embodiments, the contextual trigger is a gaze of a user dwelling at a location in the real-world environment for at least a threshold amount of time, and the selectively dimmed light indicates the location.

According to a further aspect, there is provided a computer-readable storage medium storing instructions that, when executed by a computing system, cause the computing system to perform a process for controlling one or more pixelated multi-state panels on a head-worn display, the process comprising: providing a view of an artificial reality environment to a user through lenses of the head-worn display, wherein the lenses are at least partially covered by the one or more pixelated multi-state panels, wherein the one or more pixelated multi-state panels are configured to have at least a partially transparent state, wherein the one or more pixelated multi-state panels each include an array of pixels, and wherein each pixel, within the array of pixels, is independently controllable for brightness based on application of an electric current; identifying a contextual trigger; and based on the identified contextual trigger, selectively dimming at least one of the one or more pixelated multi-state panels by controlling the electric current being applied to a set of pixels within the array of pixels, thereby dimming at least a portion of the view of the artificial reality environment on the head-worn display.

In some embodiments, the artificial reality environment is a virtual reality environment.

In some embodiments, the view of the artificial reality environment includes one or more virtual objects overlaid on a real-world environment.

According to a further aspect, there is provided a computing system for controlling one or more multi-state panels on a head-worn display, the computing system comprising: one or more processors; and one or more memories storing instructions that, when executed by the one or more processors, cause the computing system to perform a process comprising: providing a view of an environment to a user through lenses of the head-worn display, wherein the environment is a real-world environment or an artificial reality environment, wherein the lenses are at least partially covered by the one or more multi-state panels, wherein the one or more multi-state panels are configured to have at least a partially transparent state, wherein the one or more multi-state panels each include an array of pixels, and wherein each pixel, within the array of pixels, is independently controllable for brightness based on application of an electric current; identifying a contextual trigger; and based on the identified contextual trigger, selectively modifying light by at least one of the one or more multi-state panels by controlling the electric current being applied to at least one pixel within the array of pixels, thereby modifying light in at least a portion of the view of the environment on the head-worn display.

In some embodiments, the environment is the artificial reality environment, the head-worn display is an artificial reality head-mounted display configured to apply lighting effects to the lenses to render the artificial reality environment, and the selectively modifying the light by the at least one of the one or more multi-state panels is further based on deactivation of the lighting effects applied to the lenses by the artificial reality head-mounted display.

In some embodiments, the environment is the artificial reality environment, and the head-worn display is an artificial reality head-mounted display including a primary display, configured to render an artificial reality environment to the lenses, the primary display being at least partially covered by the one or more multi-state panels.

In some embodiments, the head-worn display is configured to communicate over a network via a communications interface; and the contextual trigger is a notification received by the head-worn display over the network via the communications interface.

In some embodiments, the one or more multi-state panels are liquid crystal panels.

In some embodiments, the process further comprises: mapping the identified contextual trigger to a user interface element, wherein the modified at least the portion of the view of the environment includes the user interface element.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations of the present technology for selectively controlling one or more multi-state panels on a head-worn display.
Figure 6A is a conceptual diagram illustrating an example head-worn display providing a movement indication to a user.
Figure 6B is a conceptual diagram illustrating an example head-worn display providing an option to a user to share a captured image.
Figure 6C is a conceptual diagram illustrating an example head-worn display showing a user that a person has "liked" a shared image.
Figure 6D is a conceptual diagram illustrating an example head-worn display indicating to a user that a person has been located in a real-world environment.
Figure 6E is a conceptual diagram illustrating an example head-worn display indicating to a user that a physical object has been located in a real-world environment.
Figure 7 is a flow diagram illustrating a process used in some implementations of the present technology for selectively controlling one or more peripheral multi-state panels on a head-worn display.
Figure 8 is a conceptual diagram illustrating an example view on an artificial reality (XR) device of a rendered virtual reality (VR) environment including virtual objects extending into the periphery of the primary XR display.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure integrate pixelated multi-state panels (e.g., a display that has several states including transparent states, and other states that have altered optical behavior in a pixelated way, e.g., a dimming or scattering display) into artificial reality (XR) displays (e.g., mixed reality (MR) glasses or other XR head-mounted displays (HMDs)) or conventional glasses. Conventional visual displays for XR devices can be expensive, have a low field-of-view, and consume high power. On the other hand, pixelated multi-state panels consume lower power, have a wide field-of-view, can work in bright ambient light, are light in weight, inexpensive, and computationally simple. The multi-state panels can be selectively activated based on a trigger, such as identification of a physical object in the real-world environment, based on an event occurring in an application controlling an XR display and/or the multi-state panels, based on detected audio, etc. In one example, the multi-state panels can be selectively activated to provide visual confirmation of an object pointed at or referenced by a user. In some implementations, by dimming light in a part of the user's field-of-view via a multi-state panel, a physical or virtual object shown on the head-worn display can become more visible and appear highlighted.

In some implementations, one or more multi-state panels can be provided on the periphery of a primary XR display of an XR device (e.g., an XR head-mounted display (HMD)). When a virtual object, rendered in the XR environment, is positioned or moves off the primary XR display and onto the periphery, a multi-state panel at the periphery can selectively dim an area corresponding to the virtual object (and, in some implementations, of the size, shape, position, and/or velocity of movement of the virtual object). As the virtual object moves back onto the primary XR display, the virtual object can be transitioned from the dimmed area back onto the full XR display into its fully rendered form.

In some implementations, one or more multi-state panels can be provided as a standalone display, such as in the form of a transparent laminated display covering lenses of conventional eyeglasses and facing the user of the eyeglasses. As the user of the eyeglasses traverses the real-world environment, the multi-state display can overlay selectively dimmed areas onto the pass-through view of the real-world environment. In some implementations, the selectively dimmed areas can be user interface (UI) elements, such as arrows leading the user to a location, circles indicating an identified person or physical object in the real-world environment, etc.

In some implementations, one or more multi-state panels can be provided as a supplemental dimming display over a primary XR display on an XR device (e.g., an XR head-mounted display (HMD)). In some implementations, the primary XR display can provide an AR environment or a mixed reality (MR) environment, which can include at least a partial pass-through view of the real-world environment and/or one or more virtual objects overlaid thereon. In some implementations, the primary XR display can render a virtual reality (VR) environment, which can be a fully computer-generated, immersive experience. As the user of the XR device traverses the real-world environment or the VR environment, the overlaid multi-state display can selectively dim areas based on a contextual trigger, such as identification of a virtual object in the XR environment, identification of a physical object in the real-world environment, an event in an XR application executing on the XR device, etc. In some implementations, the multi-state panels can only be activated when the primary XR display on the XR device is deactivated (e.g., when no virtual objects are being rendered on the primary XR display).

In some implementations, one or more multi-state panels can be provided as a standalone, externally facing display on conventional eyeglasses, or as a secondary externally facing display on an XR device (e.g., MR glasses or other XR HMD). In such implementations, the multi-state panels can be selectively dimmed to provide indications to other users in the real-world environment. For example, a circular UI element can be outwardly dimmed to indicate to other users that they are being recorded by the XR device.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Some implementations described herein improve on existing XR systems and devices by extending XR experiences beyond conventional XR display screens and conventional XR display technologies. For example, some implementations can extend an XR experience onto the periphery of the existing primary XR display by using multi-state panels surrounding the primary XR display. The multi-state panels can be selectively dimmed, for example, to represent virtual objects positioned in and/or moving onto the periphery of the primary XR display. Some implementations can employ multi-state panels over primary XR displays to provide indications to a user without requiring computationally expensive rendering on the primary XR display, thereby conserving battery power. Some implementations can provide multi-state panels over traditional eyeglasses, thereby creating an MR-like experience without requiring a traditional XR display screen. Thus, the implementations described herein can provide an improved user experience with lower processing and battery usage, by implementing relatively simple, inexpensive multi-state panels, while avoiding larger, more computationally expensive XR display screens.

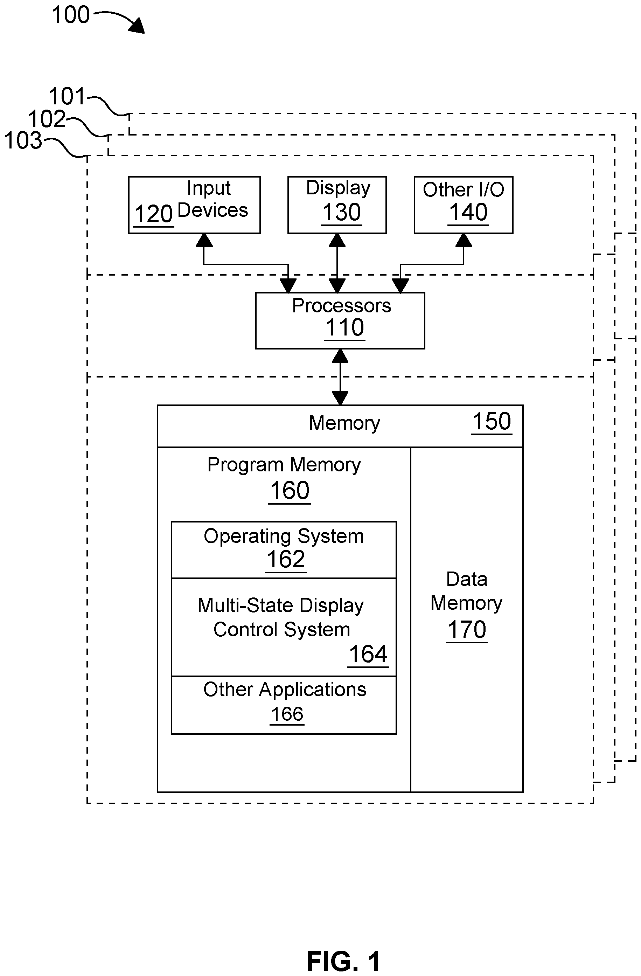

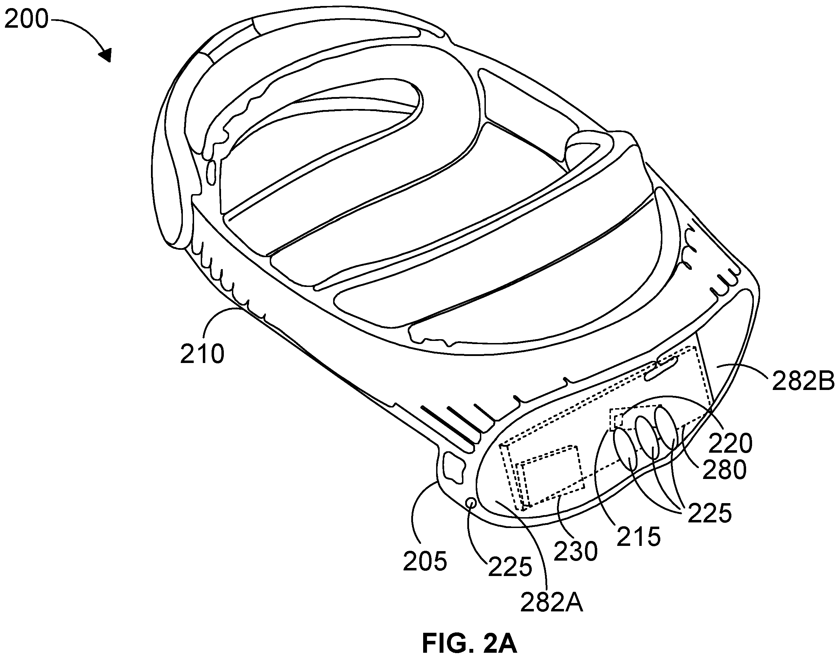

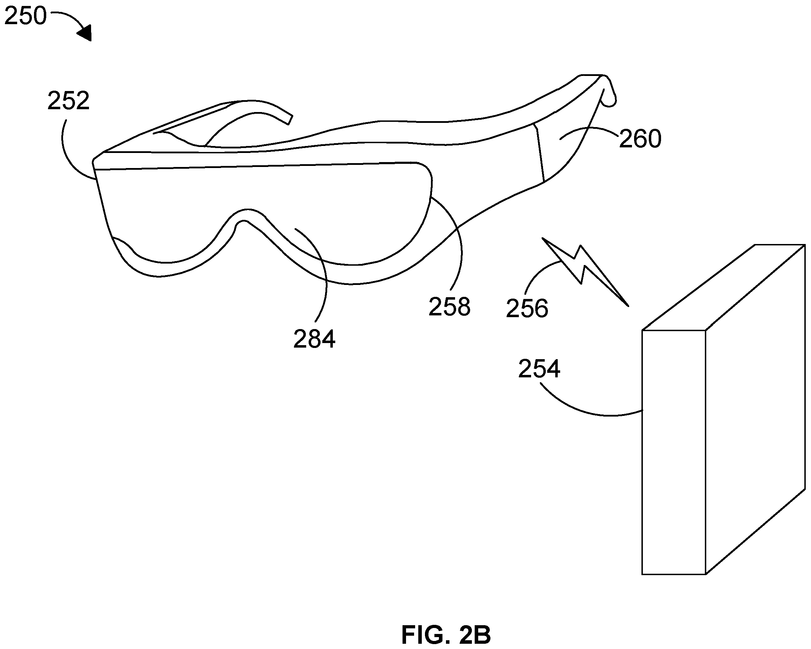

Several implementations are discussed below in more detail in reference to the figures. Figure 1 is a block diagram illustrating an overview of devices on which some implementations of the disclosed technology can operate. The devices can comprise hardware components of a computing system 100 that can selectively control one or more pixelated multi-state panels on a head-worn display. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, grids, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, multi-state display control system 164, and other application programs 166. Memory 150 can also include data memory 170 that can include, e.g., rendering data, pixel control data, brightness data, trigger data, event data, object recognition data, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. In this example, HMD 200 also includes augmented reality features, using passthrough cameras 225 to render portions of the real world, which can have computer generated overlays. The HMD 200 includes a front rigid body 205 and a band 210. The front rigid body 205 includes one or more electronic display elements of one or more electronic displays 245, an inertial motion unit (IMU) 215, one or more position sensors 220, cameras and locators 225, and one or more compute units 230. The position sensors 220, the IMU 215, and compute units 230 may be internal to the HMD 200 and may not be visible to the user. In various implementations, the IMU 215, position sensors 220, and cameras and locators 225 can track movement and location of the HMD 200 in the real world and in an artificial reality environment in three degrees of freedom (3DoF) or six degrees of freedom (6DoF). For example, locators 225 can emit infrared light beams which create light points on real objects around the HMD 200 and/or cameras 225 capture images of the real world and localize the HMD 200 within that real world environment. As another example, the IMU 215 can include e.g., one or more accelerometers, gyroscopes, magnetometers, other non-camera-based position, force, or orientation sensors, or combinations thereof, which can be used in the localization process. One or more cameras 225 integrated with the HMD 200 can detect the light points. Compute units 230 in the HMD 200 can use the detected light points and/or location points to extrapolate position and movement of the HMD 200 as well as to identify the shape and position of the real objects surrounding the HMD 200.

The electronic display(s) 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, front rigid body 205 can include one or more multi-state panels 280 facing the user of HMD 200, at least partially covering and in addition to the electronic display(s) 245. Multi-state panel(s) 280 can be a single dimming panel or multiple dimming panels (e.g., a dimming panel for each user eye provided over each electronic display). Dimming panel(s) 280 can be configured to selectively dim image light provided by electronic display(s) 245. Alternatively or additionally, in some implementations, front rigid body 205 can include one or more multi-state panels 282A-282B positioned at the periphery (i.e., at one or more edges) of electronic display(s) 245, which can function similarly as multi-state panel(s) 280 to selectively scatter light. In some implementations, scattering panel(s) 280 and/or scattering panels 282A-282B can be multi-state panels configured to dim a light provided by electronic display(s) 245, white backlight, and/or ambient light.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

In some implementations, HMD 252 can include one or more multi-state panels (not shown) facing the user of HMD 252, at least partially covering and in addition to the pass-through display 258, similar to that described with respect to HMD 200 of Figure 2A. The multi-state panel(s) can be configured to selectively dim output image light and/or light passed through display 258. Alternatively or additionally, in some implementations, HMD 252 can include one or more multi-state panels (not shown) positioned at the periphery of pass-through display 258, similar to that described with respect to HMD 200 of Figure 2A. In some implementations, HMD 252 can include one or more multi-state panels 284 laminated or otherwise provided on its exterior, which can selectively dim pass-through display 258 as seen by users in the real-world environment surrounding HMD 252 when worn.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

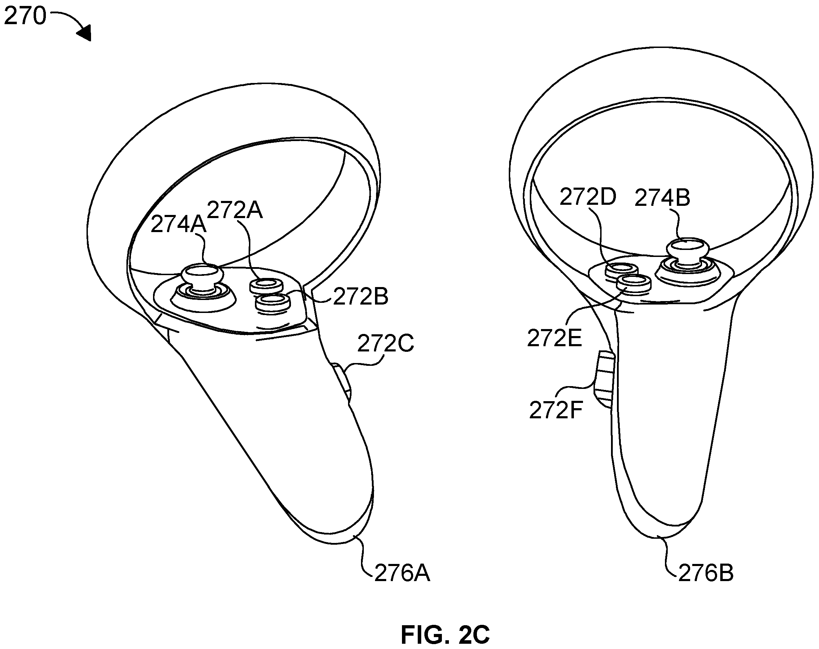

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

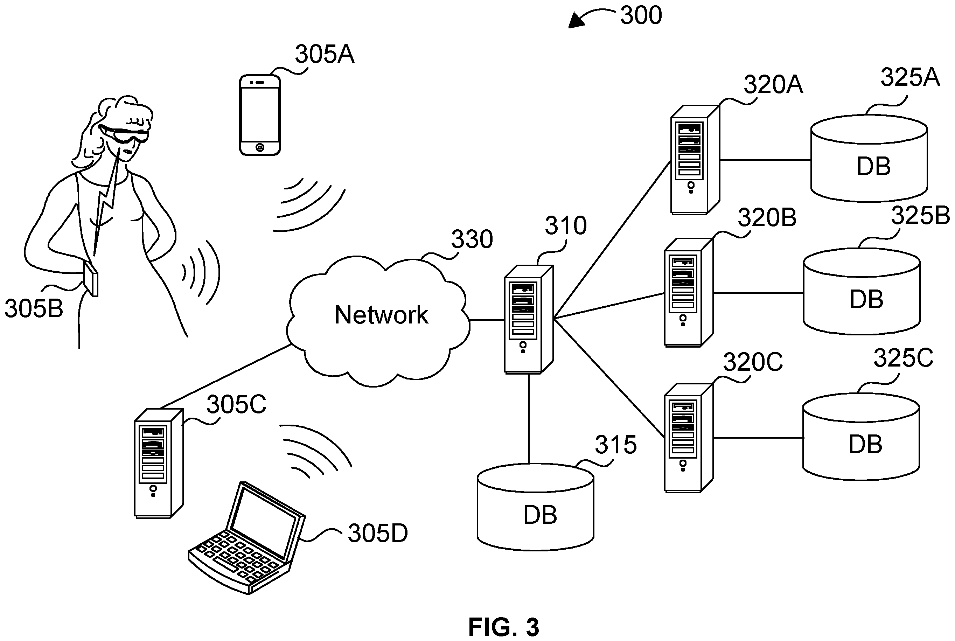

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

In some implementations, servers 310 and 320 can be used as part of a social network. The social network can maintain a social graph and perform various actions based on the social graph. A social graph can include a set of nodes (representing social networking system objects, also known as social objects) interconnected by edges (representing interactions, activity, or relatedness). A social networking system object can be a social networking system user, nonperson entity, content item, group, social networking system page, location, application, subject, concept representation or other social networking system object, e.g., a movie, a band, a book, etc. Content items can be any digital data such as text, images, audio, video, links, webpages, minutia (e.g., indicia provided from a client device such as emotion indicators, status text snippets, location indictors, etc.), or other multi-media. In various implementations, content items can be social network items or parts of social network items, such as posts, likes, mentions, news items, events, shares, comments, messages, other notifications, etc. Subjects and concepts, in the context of a social graph, comprise nodes that represent any person, place, thing, or idea.

A social networking system can enable a user to enter and display information related to the user's interests, age / date of birth, location (e.g., longitude/latitude, country, region, city, etc.), education information, life stage, relationship status, name, a model of devices typically used, languages identified as ones the user is facile with, occupation, contact information, or other demographic or biographical information in the user's profile. Any such information can be represented, in various implementations, by a node or edge between nodes in the social graph. A social networking system can enable a user to upload or create pictures, videos, documents, songs, or other content items, and can enable a user to create and schedule events. Content items can be represented, in various implementations, by a node or edge between nodes in the social graph.

A social networking system can enable a user to perform uploads or create content items, interact with content items or other users, express an interest or opinion, or perform other actions. A social networking system can provide various means to interact with non-user objects within the social networking system. Actions can be represented, in various implementations, by a node or edge between nodes in the social graph. For example, a user can form or join groups, or become a fan of a page or entity within the social networking system. In addition, a user can create, download, view, upload, link to, tag, edit, or play a social networking system object. A user can interact with social networking system objects outside of the context of the social networking system. For example, an article on a news web site might have a "like" button that users can click. In each of these instances, the interaction between the user and the object can be represented by an edge in the social graph connecting the node of the user to the node of the object. As another example, a user can use location detection functionality (such as a GPS receiver on a mobile device) to "check in" to a particular location, and an edge can connect the user's node with the location's node in the social graph.

A social networking system can provide a variety of communication channels to users. For example, a social networking system can enable a user to email, instant message, or text/SMS message, one or more other users. It can enable a user to post a message to the user's wall or profile or another user's wall or profile. It can enable a user to post a message to a group or a fan page. It can enable a user to comment on an image, wall post or other content item created or uploaded by the user or another user. And it can allow users to interact (via their personalized avatar) with objects or other avatars in an artificial reality environment, etc. In some embodiments, a user can post a status message to the user's profile indicating a current event, state of mind, thought, feeling, activity, or any other present-time relevant communication. A social networking system can enable users to communicate both within, and external to, the social networking system. For example, a first user can send a second user a message within the social networking system, an email through the social networking system, an email external to but originating from the social networking system, an instant message within the social networking system, an instant message external to but originating from the social networking system, provide voice or video messaging between users, or provide an artificial reality environment were users can communicate and interact via avatars or other digital representations of themselves. Further, a first user can comment on the profile page of a second user, or can comment on objects associated with a second user, e.g., content items uploaded by the second user.

Social networking systems enable users to associate themselves and establish connections with other users of the social networking system. When two users (e.g., social graph nodes) explicitly establish a social connection in the social networking system, they become "friends" (or, "connections") within the context of the social networking system. For example, a friend request from a "John Doe" to a "Jane Smith," which is accepted by "Jane Smith," is a social connection. The social connection can be an edge in the social graph. Being friends or being within a threshold number of friend edges on the social graph can allow users access to more information about each other than would otherwise be available to unconnected users. For example, being friends can allow a user to view another user's profile, to see another user's friends, or to view pictures of another user. Likewise, becoming friends within a social networking system can allow a user greater access to communicate with another user, e.g., by email (internal and external to the social networking system), instant message, text message, phone, or any other communicative interface. Being friends can allow a user access to view, comment on, download, endorse or otherwise interact with another user's uploaded content items. Establishing connections, accessing user information, communicating, and interacting within the context of the social networking system can be represented by an edge between the nodes representing two social networking system users.

In addition to explicitly establishing a connection in the social networking system, users with common characteristics can be considered connected (such as a soft or implicit connection) for the purposes of determining social context for use in determining the topic of communications. In some embodiments, users who belong to a common network are considered connected. For example, users who attend a common school, work for a common company, or belong to a common social networking system group can be considered connected. In some embodiments, users with common biographical characteristics are considered connected. For example, the geographic region users were born in or live in, the age of users, the gender of users and the relationship status of users can be used to determine whether users are connected. In some embodiments, users with common interests are considered connected. For example, users' movie preferences, music preferences, political views, religious views, or any other interest can be used to determine whether users are connected. In some embodiments, users who have taken a common action within the social networking system are considered connected. For example, users who endorse or recommend a common object, who comment on a common content item, or who RSVP to a common event can be considered connected. A social networking system can utilize a social graph to determine users who are connected with or are similar to a particular user in order to determine or evaluate the social context between the users. The social networking system can utilize such social context and common attributes to facilitate content distribution systems and content caching systems to predictably select content items for caching in cache appliances associated with specific social network accounts.

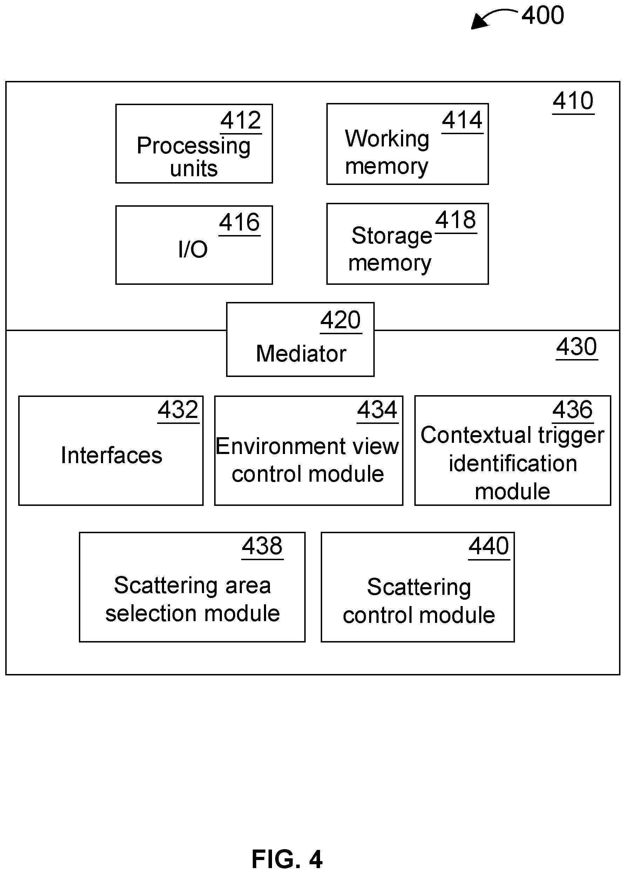

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for selectively controlling one or more pixelated multi-state panels on a head-worn display. Specialized components 430 can include environment view control module 434, contextual trigger identification module 436, dimming area selection module 438, dimming control module 440, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

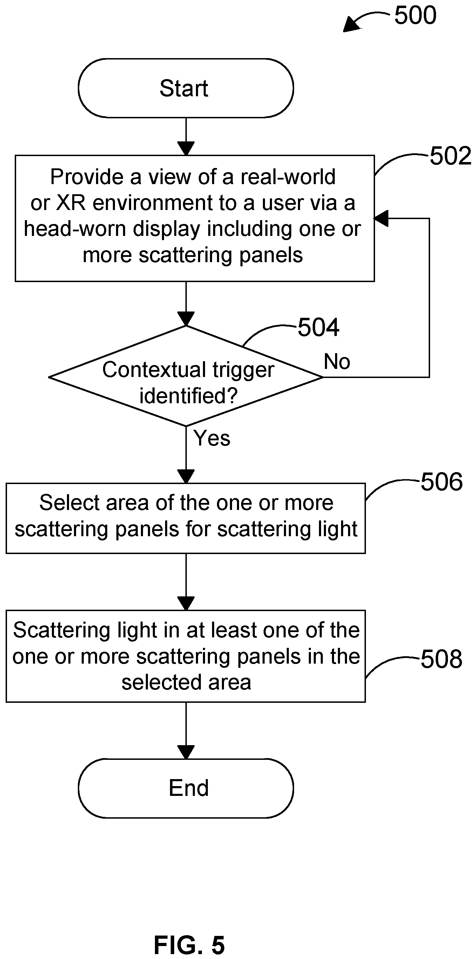

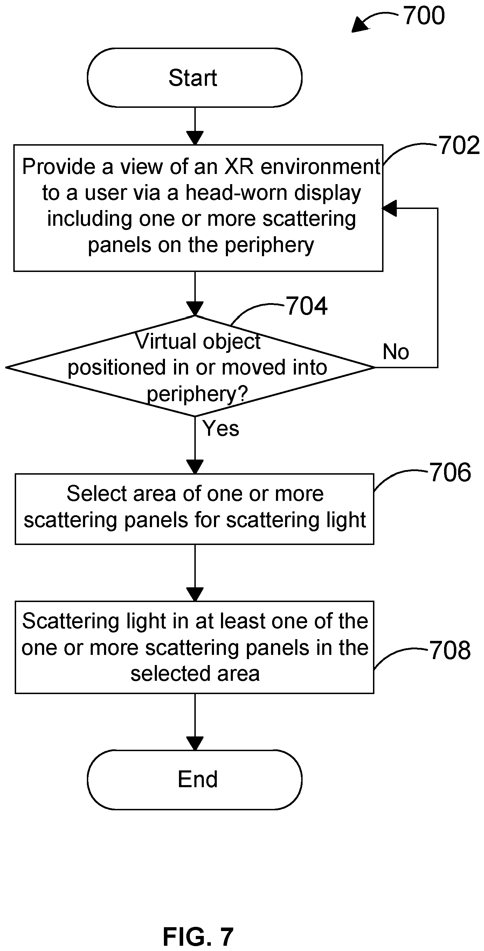

In some implementations, environment view control module 434 can provide a view of an environment to a user via a head-worn display. In some implementations, environment view control module 434 can provide a fully immersive, computer-generated view of a virtual reality (VR) environment. In some implementations, environment view control module 434 can provide a view of another artificial reality (XR) environment, such as an augmented reality (AR) environment in which a view of a real-world environment is fed to the head-worn display via one or more cameras, or a mixed reality (MR) environment in which a view of a real-world environment is passed through the lenses of the head-worn display. In some implementations, the AR or MR environment can include one or more virtual objects overlaid onto the view of the real-world environment. In some implementations, the head-worn display can be conventional eyeglasses having one or more multi-state panels overlaid thereon. In such implementations, environment view control module 434 can initially and/or periodically facilitate providing of a view of the real-world environment by ensuring that the view is unobstructed by dimming. Further details regarding providing a view of a real-world or XR environment are described herein with respect to block 502 of Figure 5 and block 702 of Figure 7.

Contextual trigger identification module 436 can determine whether a trigger has been identified for selectively dimming one or more multi-state panels on the head-worn display. The one or more multi-state panels can be included, for example, on a periphery of the head-worn display, over the lenses of the head-worn display facing the user, and/or on the externally facing portion of the lenses of the head-worn display. The trigger can be contextual in that it can be related to an event or object in the real-world environment surrounding the head-worn display, an event or object in an XR application executing on the head-worn display, a system-level event (e.g., a timer), an application-level event (e.g., a calendar, navigation directions, a social media application, a messaging application, a notification, etc.), deactivation of an XR environment (e.g., activating pass-through, quitting an XR application, turning off a primary XR display, etc.), and/or the like. Further details regarding identifying a contextual trigger are described herein with respect to block 504 of Figure 5 and block 704 of Figure 7.

Dimming area selection module 438 can select one or more areas of the one or more multi-state panels to dim or scatter light. In some implementations, dimming area selection module 438 can select the one or more areas based on their correlation to the trigger identified by contextual trigger identification module 436. For example, a particular contextual trigger can be associated with a particular user interface (UI) element that can be rendered via dimming on the head-worn display. In another example, a particular contextual trigger can be associated with a particular region to be dimmed (e.g., left side view, right side view, top view, bottom view, etc.). In still another example, a location of a particular object the in real-world environment or XR environment can dictate the location of the dimmed area. Further details regarding selecting an area of one or more multi-state panels for dimming light are described herein with respect to block 506 of Figure 5 and block 706 of Figure 7.

Dimming control module 440 can dim, scatter, or otherwise modify light via at least one of the one or more multi-state panels in the area selected by dimming area selection module 438. In some implementations, dimming control module 440 can select an amount of electric current to be applied to one or more pixels (or set of pixels) in the multi-state panels in order to control whether or not dim and/or light is applied and/or to what degree. In other words, in some implementations, dimming control module 440 can apply varying amounts of electric current to various pixels and/or sets of pixels to create gradients of light modification. Further details regarding selectively dimming or otherwise modifying light via one or more multi-state panels are described herein with respect to block 508 of Figure 5 and block 708 of Figure 7.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations for selectively controlling one or more multi-state panels on a head-worn display. In some implementations, process 500 can be performed as a response to activation or donning of the head-worn display. In some implementations, process 500 can be performed as a response to launching of an application providing instructions and/or making application programming interface (API) calls to the head-worn display. In some implementations, process 500 can be performed when it is determined that the head-worn display has sufficient power, e.g., that the battery is charged higher than a threshold amount, e.g., 50%.

In some implementations, process 500 can be performed by the head-worn display including one or more integral processing components, and/or one or more external processing components in operable communication with the head-worn display. The head-worn display can be, for example, conventional eyeglasses (i.e., eyeglasses not including a primary XR display for rendering virtual objects and/or artificial reality (XR) environments), mixed reality (MR) glasses configured to display one or more virtual objects overlaid onto a pass-through view of a real-world environment, or other XR device (e.g., an augmented reality (AR) head-worn display (HMD) configured to display one or more virtual objects overlaid onto a view of the real-world environment fed to the AR HMD by one or more cameras, and/or virtual reality (VR) HMD configured to display a fully computer-generated, immersive virtual environment). In some implementations, process 500 can be performed by multi-state display control system 164 of Figure 1. In some implementations, process 500 can be performed by HMD 200 of Figure 2A and/or HMD 252 of Figure 2B. In some implementations, one or more processors controlling the one or more multi-state panels can be separate from one or more processors controlling an XR environment renderable on the XR device.

At block 502, process 500 can provide a view of an environment to a user through one or more lenses of the head-worn display. In some implementations, the environment can include a real-world environment shown in a pass-through view through or on the lenses of the head-worn display. In some implementations, the environment can be an XR environment, such an AR or MR environment in which one or more virtual objects are overlaid on a see- or pass-through view of the real-world environment. In some implementations, the environment can be a fully computer-generated, immersive VR environment rendered on the lenses of the head-worn display.

The one or more lenses of the head-worn display can be at least partially covered by one or more multi-state panels configured to be at least partially transparent when not scattering light. The one or more multi-state panels can be "impoverished" displays having several states including transparent states, and other states that have altered optical behavior in a pixelated manner. In some implementations, the one or more multi-state panels can include one or more multi-state panels configured to dim backlight and/or ambient light, while in other implementations, the one or more multi-state panels can generate white or other colored areas. In some implementations, the one or more multi-state panels can be smart glass panels laminated or otherwise affixed to the one or more lenses. In some implementations, the one or more multi-state panels can employ pixelated dimming and/or local light modification techniques. Exemplary multi-state panels can include liquid crystal display (LCD) panels, suspended particle device (SPD) panels, electrochromic devices, micro-blinds, dimming displays, scattering displays, etc. In some implementations, the one or more multi-state panels can be integral with the one or more lenses. In some implementations, the multi-state panels can be at least partially pixelated, and can include an array of pixels, with each pixel (or set of pixels) being independently controllable for brightness based on application of an electrical current to the pixel (or set of pixels). The head-worn display can include the one or more multi-state panels in a position on the lenses that is user-facing and proximate to the user (i.e., provided on the interior of the head-worn display) and/or positioned away from the user and facing away from the user (i.e., provided on the exterior of the head-worn display).

At block 504, process 500 can determine whether a trigger (or combination of triggers) has been identified. In some implementations, the trigger can be contextual in that it can be based on a real-world environment context, XR environment context, and/or user context. In some implementations, the contextual trigger can include a physical object in the real-world environment identified by process 500 by applying object detection, object recognition, facial recognition, and/or machine learning techniques, such as a person, a building or other structure, an animal, a vehicle, an item, and/or any other physical object. In some implementations, the contextual trigger can include a virtual object in an XR environment identified by process 500 at a system-level or by an XR application executing on the XR device. In some implementations, the contextual trigger can include a user identification, user gesture, or user gaze directed toward a physical or virtual object, which can be identified from one or more microphones, one or more images captured by a camera on the head-worn device, etc. In some implementations, the contextual trigger can include a physical object in the real-world environment and/or a virtual object in an XR environment being at a particular location, being at a particular position relative to one or more other physical and/or virtual objects, interacting with one or more other physical and/or virtual objects, etc. In some implementations, the contextual trigger can be based on contextual artificial intelligence (AI) applied to a situation captured by the head-worn display, such as analysis of a conversation of the user, indications from the user, or item(s) in the real-world environment.

In some implementations, the contextual trigger can include an event occurring in and/or recognized by an application executing on the head-worn display. For example, the application can be a navigation application, and the event can be a user approaching a turning point. In another example, the application can be an XR game, and the event can be an interaction between virtual objects and/or an interaction between the user and one or more virtual objects. In some implementations, the contextual trigger can include a timing event occurring in a timer application. In some implementations, the contextual trigger can include a notification, such as an e-mail received via an e-mail application, a message received via a messaging application, a calendar notification, a notification from a social media or news application, etc. In some implementations, the contextual trigger can include an available operation for an application executing or executable on the head-worn display, such as taking a picture, taking a video, capturing audio, etc. In some implementations, the contextual trigger can include execution of an operation on the head-worn display, such as taking a picture, taking a video, capturing audio, etc. In some implementations, the contextual trigger can include a tracked gaze of a user, and/or the gaze of the user dwelling at a particular location and/or at a particular object for over a threshold amount of time.

In some implementations, the contextual trigger can include identification of audio. For example, one or more microphones integral with or in operable communication with the head-worn display can capture an audible command made by the user (or other users). Process 500 can perform speech recognition and/or natural language processing techniques to identify the audible command and determine whether the audible command corresponds to a contextual trigger.

In some implementations, the contextual trigger can include a level of brightness being applied to the lenses of the head-worn display being below or exceeding a threshold, such as identified via readings of one or more illuminance meters. In some implementations, process 500 can detect the brightness applied to the head-worn display from ambient lighting, such as from sunlight and/or one or more other external light sources. In some implementations, process 500 can detect the brightness applied to the head-worn display by an XR device, i.e., from an XR environment rendered on the lenses, either based on readings from one or more illuminance meters, or based on one or more system-provided metrics (e.g., indicating the currently set brightness of the display, identification of colors rendered on the display, etc.). In some implementations, the brightness threshold for an XR environment rendered on the lenses can be adjusted based on the detected brightness level of the ambient light.

If a contextual trigger is not identified at block 504, process 500 can return to block 502, and continue to provide a view of a real-world or XR environment on the head-worn display. If a contextual trigger is identified at block 504, process 500 can proceed to block 506. At block 506, process 500 can select one or more areas of the one or more multi-state panels for dimming or otherwise modifying light. In some implementations, process 500 can select the one or more areas to be dimmed or scattered based on the contextual trigger. For example, process 500 can select an area of the lenses having detected brightness above a threshold to dim. In another example, process 500 can select an area of the lenses having detected brightness below a threshold to apply white or a different colored light. In another example, process 500 can select a location to dim or scatter light based on the position of one or more detected or identified physical and/or virtual objects. In some implementations, process 500 can select a user interface (UI) element to generate on the lenses (e.g., through dimming) based on the contextual trigger, such as a particular icon (e.g., an arrow indicating a direction, a circle indicating an identified object, etc.). In some implementations, process 500 can select an area to dim or scatter light based on a gaze of the user determined from an eye tracking system described herein. For example, process 500 can dim or scatter light to indicate the location of the gaze direction, highlight an area surrounding the gaze direction, dim an area surrounding the gaze direction in order to "highlight" the location of the gaze direction, etc. In some implementations, process 500 can select an area to dim or scatter light based on further information to be provided relative to an identified person or object.

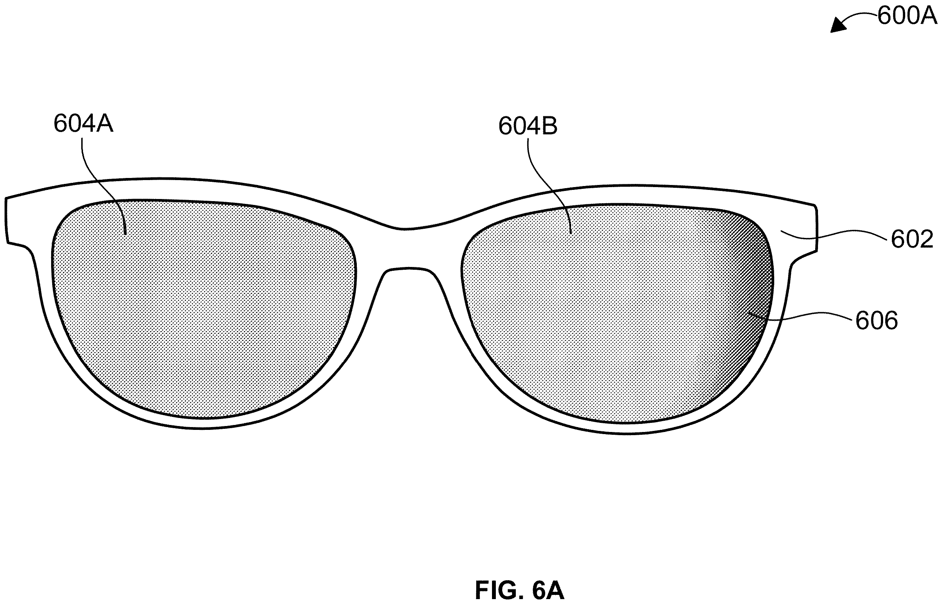

At block 508, process 500 can dim or scatter light by at least one of the one or more multi-state panels in the selected area (i.e., selectively dim or scatter light by at least one of the one or more multi-state panels). In some implementations, process 500 can dim or scatter light in the selected area by controlling the electric current being applied to at least one pixel within the array of pixels. Thus, at least a portion of the view of the environment provided through or by the head-worn display can be at least partially obstructed (e.g., dimmed). Exemplary head-worn displays having selectively dimmed multi-state panels are shown and described herein with respect to Figures 6A-6E.

Figure 6A is a conceptual diagram illustrating an example 600A head-worn display 602 providing a movement indication to a user, from the perspective of the user wearing head-worn display 602. As described herein, head-worn display 602 can be conventional eyeglasses including one or more multi-state panels at least partially covering lenses 604A-604B facing the user, or mixed reality (MR) glasses including one or more multi-state panels at least partially covering the primary MR display of the MR glasses facing the user. However, in some implementations, it is contemplated that head-worn display 602 can alternatively or additionally include one or more multi-state panels on an opposite side of lenses 604A-604B (i.e., an external side opposite to the user and facing away from the user), such that other user(s) looking at head-worn display 602 can see dimmed areas on head-worn display 602. In some implementations, such external-facing dimmed areas can provide indications, alerts, directions, etc., to other user(s), and/or to head-worn display(s) of other user(s), who or which can take appropriate actions based on the external display of head-worn display 602.

In example 600A, one or more processors integral with or in operable communication with head-worn display 602 can execute a navigation application. The user can select a destination, e.g., by announcing a particular destination (as captured by one or more microphones integral with or in operable communication with head-worn display 602), by selecting a destination via head-worn display 602 (e.g., via virtual buttons displayed on head-worn display 602), by selecting a destination on a mobile device facilitating execution of the navigation application, etc. Head-worn display 602 can then display indications to the user leading the user to the destination, e.g., dimmed area 606 of lens 604B, indicating that the user should turn right to continue to the destination. Head-worn display 602 can dim an opposite area on lens 604A to indicate that the user should turn left, a top area on lenses 604A-604B to indicate that the user should move forward, a bottom area on lenses 604A-604B to indicate that the user should go backward, etc.

In some implementations, the dimmed portions of head-worn display 602 can include various levels of dimming, thereby creating a gradient as shown in dimmed area 606 of lens 604B. One or more processors controlling head-worn display 602 can control varying levels of brightness/dimming by applying differing levels of voltage to a pixel or set of pixels. For example, in the case of a liquid crystal (LC) multi-state panel, applying varying amounts of voltage can rotate the polarization of the light to varying degrees, creating varying levels of dimming.

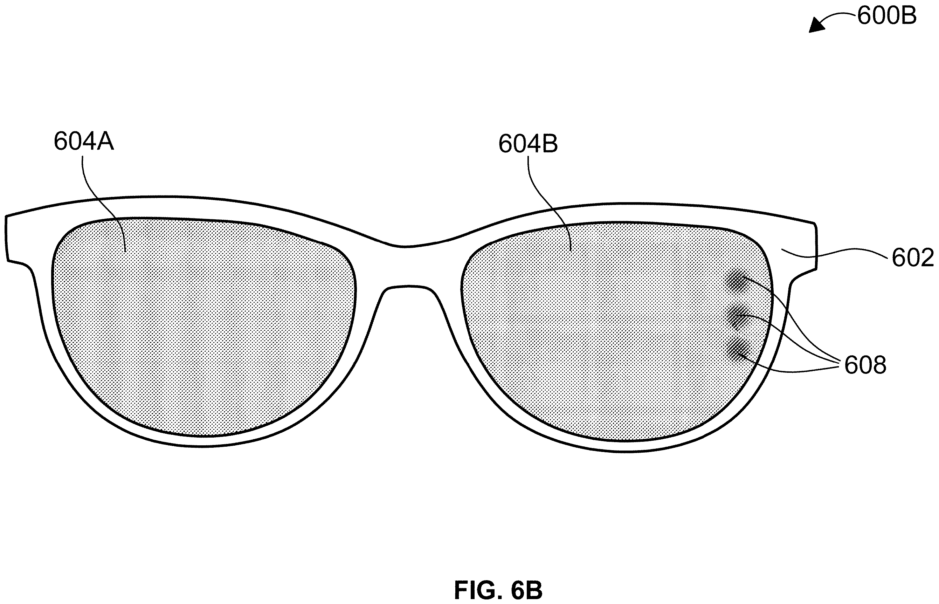

Figure 6B is a conceptual diagram illustrating an example 600B head-worn display 602 providing an option to a user to share a captured image, from the perspective of the user wearing head-worn display 602. In some implementations, head-worn display 602 can include input-output components other than the multi-state panels, such as one or more image capture devices. For example, head-worn display 602 can include one or more externally facing cameras (not shown), which the user can control by making an audible command, making a gesture, tapping head-worn display 602, etc., in order to capture image(s) of the real-world environment surrounding the user. Based on a capture of an image (e.g., a contextual trigger), head-worn display 602 can display dimmed area 608, indicating that the user can share the captured image. The user can cause head-worn display 602 (or other external processing components) to share the captured image by, for example, tapping or touching head-worn display 602 proximate to dimmed area 608. In other examples, however, the user can cause head-worn display 602 to share the captured image by making an audible command, performing a gesture, etc. Although described primarily herein as capturing and sharing images, it is contemplated that, in some implementations, head-worn display 602 can similarly capture and/or share videos.

Head-worn display 602 can share the captured image over any suitable network. Further, head-worn display 602 can share the captured image via any suitable platform, such as e-mail, a multimedia message, a messenger application, etc. In some implementations, head-worn display 602 can share the captured image or video to a social media platform with one or more people, one or more groups, friends or followers of the user, based on a social graph as described further herein, etc.

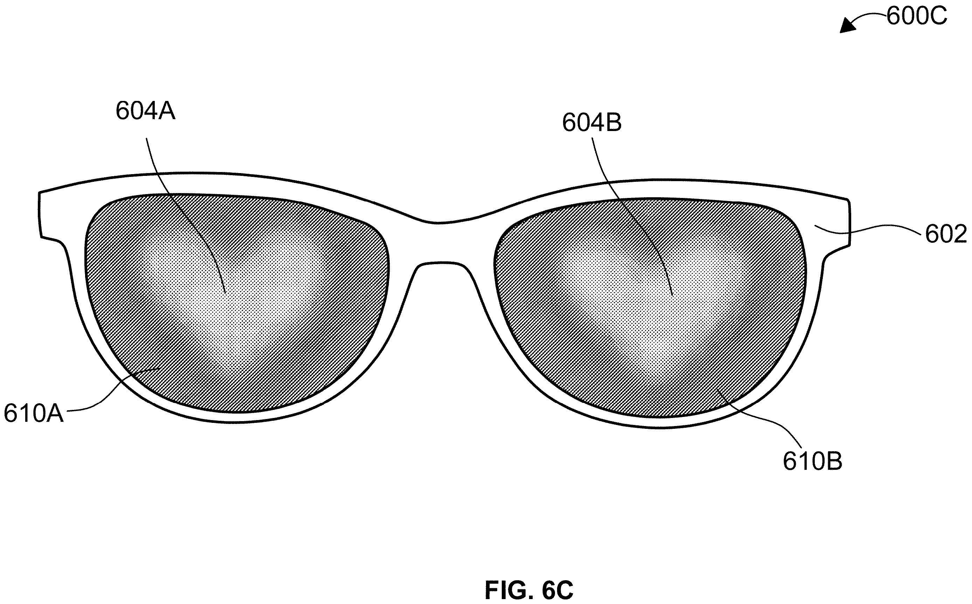

Figure 6C is a conceptual diagram illustrating an example 600C head-worn display 602 showing a user wearing head-worn display 602 that a person has "liked" a shared image (e.g., a contextual trigger). In some implementations, the recipient of the shared image can react to the shared image via a return message, via a selection from a social media platform relative to the shared image, etc. In some implementations, head-worn display 602 can associate particular user interface (UI) elements with particular actions. In example 600C, a recipient "liking" the shared image can be associated with a heart UI element. Thus, head-worn display 602 can selectively dim lenses 604A-604B in dimmed areas 610A-610B to highlight transparent heart shapes in front of the eyes of the user. By only dimming the peripheral areas of lenses 604A-604B, the user's view of the real-world or XR environment directly in front of the eyes is not obstructed or impeded by the dimming.

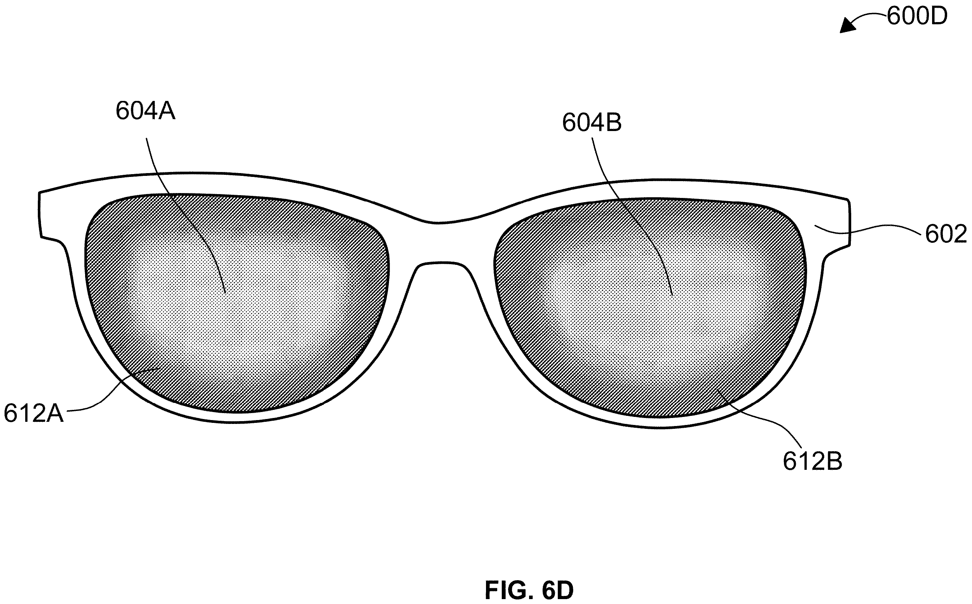

Figure 6D is a conceptual diagram illustrating an example 600D head-worn display 602 indicating to a user that a person has been located in a real-world environment surrounding head-worn display 602 (e.g., a contextual trigger), from the perspective of the user wearing head-worn display 602. In some implementations, head-worn display 602 can have object recognition and/or facial recognition capabilities, which, in some implementations, can be implemented via a machine learning model. For example, head-worn display 602 (or its external processing components) can compare images of the real-world environment, captured by one or more cameras of head-worn display 602, to previously captured images of people, extract and compare relevant features, and determine whether the person is known to the user. For example, head-worn display 602 can compare newly captured images to one or more labeled images of people, such as those available on a social media platform (e.g., friends or followers of the user, those within the social graph of the user, etc.), those previously captured by head-worn display 602 and labeled by the user, etc. Upon location of a person in the real-world environment, head-worn display 602 can display dimmed areas 612A-612B on lenses 604A-604B, respectively, narrowing in on and appearing to highlight the location of the person.

In one example, when an image is captured as described via example 600B, shared with a recipient via social media, and liked by the recipient via social media (thereby rendering the view shown in example 600C), head-worn display 602 can compare subsequent captured images to the recipient's social media profile image(s) to determine if the recipient is present in the real-world environment. Upon locating and identifying the recipient in the real-world environment, head-worn display 602 can display dimmed areas 612A-6012B on lenses 604A-604B, respectively, narrowing in on appearing to highlight the recipient. Thus, the user can easily locate the recipient in the real-world environment.

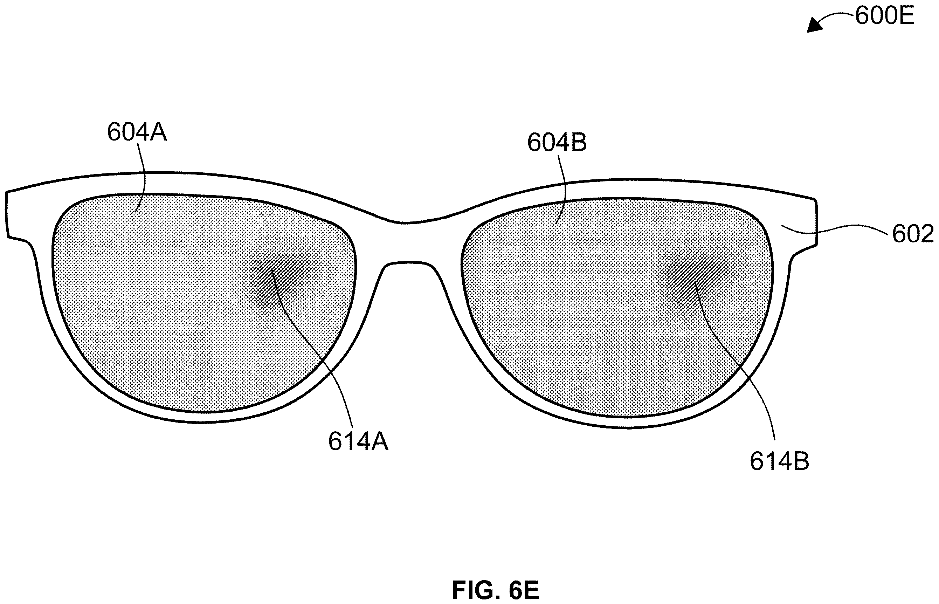

Figure 6E is a conceptual diagram illustrating an example 600E head-worn display 602 indicating to a user that a physical object has been located in a real-world environment (e.g., a contextual trigger), from the perspective of the user wearing head-worn display 602. In some implementations, head-worn display 602 can have object detection and/or object recognition capabilities, which can be implemented, e.g., by applying machine learning models. For example, head-worn display 602 (or its external processing components) can compare images of the real-world environment, captured by one or more cameras of head-worn display 602, to previous captured images of objects (e.g., buildings, animals, landmarks, etc.), extract and compare relevant features, and determine whether the object corresponds to a known object. Alternatively or additionally, head-worn display 602 can have text recognition capabilities, such that head-worn display 602 can identify and understand signs indicating particular objects, locations, directions, etc. Thus, head-worn display 602 can display dimmed areas 614A-614B pointing to the identified object, thereby indicating to the user where the identified object is within the view.

In one example, when head-worn display 602 executes a navigation application (such as is shown in example 600A), head-worn display 602 can obtain images, a name, and/or a location of an entered destination, and identify when the destination is within view of head-worn display 602 (e.g., using text recognition, object recognition, and/or location determination capabilities relative to the destination). Head-worn display 602 can then selectively dim lenses 604A-604B in dimmed areas 614A-614B, pointing to the entered destination. Thus, the user can easily locate the destination in the real-world environment. Although shown and described in Figures 6A-6E as included multi-state panels, it is contemplated that head-worn display 602 can alternatively or additionally include one or more other types of multi-state panels, and can similarly generate indications in other colors (e.g., white or any other color), and can perform similar machine learning processes as that described below relative to other scattered light.

In some implementations, when identifying a person (as in Figure 6D) or object (as in Figure 6E), the user of the head-worn display can provide feedback regarding whether the identification, indicated by the dimming, was correct. In some implementations, the feedback can be explicit, e.g., the user can make an audible announcement that the identification was correct (as captured by a microphone and processed by the head-worn display), a gesture signifying that the identification was correct (e.g., a thumbs up captured by a camera and processed by the head-worn display), etc. In some implementations, the feedback can be implicit, e.g., the user can continue to greet the identified person, the user can proceed to the identified location, etc. Based on the feedback, the head-worn display (or external processing components) can update a machine learning model used to identify such people and/or objects, thereby refining the model.

Thus, some implementations of the multi-state display control system can include a machine learning component, such as a neural network, that is trained using a variety of data, including images of known objects, known people, past objects or people seen by the user with previously captured images, contextual factors, and/or whether the user identified a predicted object or person as correct or incorrect. Some implementations can feed input data including an image of an object, image of a person, and/or contextual factors into the trained machine learning component, and based on the output, can generate a predicted object or person. Some implementations provide this predicted object or person to a user via a multi-state panel by selectively dimming the view to indicate the predicted object or person. Some implementations receive feedback about the predicted object or person to further enhance the trained model.

A "machine learning model," as used herein, refers to a construct that is trained using training data to make predictions or provide probabilities for new data items, whether or not the new data items were included in the training data. For example, training data for supervised learning can include items with various parameters and an assigned classification. A new data item can have parameters that a model can use to assign a classification to the new data item. As another example, a model can be a probability distribution resulting from the analysis of training data, such as a likelihood of an n-gram occurring in a given language based on an analysis of a large corpus from that language. Examples of models include: neural networks, support vector machines, decision trees, Parzen windows, Bayes, clustering, reinforcement learning, probability distributions, decision trees, decision tree forests, and others. Models can be configured for various situations, data types, sources, and output formats.

In some implementations, the trained model can be a neural network with multiple input nodes that receive input data including an image of an object, image of a person, and/or any contextual factors. The input nodes can correspond to functions that receive the input and produce results. These results can be provided to one or more levels of intermediate nodes that each produce further results based on a combination of lower-level node results. A weighting factor can be applied to the output of each node before the result is passed to the next layer node. At a final layer, ("the output layer,") one or more nodes can produce a value classifying the input that, once the model is trained, can be used to predict an object and/or person in the image. In some implementations, such neural networks, known as deep neural networks, can have multiple layers of intermediate nodes with different configurations, can be a combination of models that receive different parts of the input and/or input from other parts of the deep neural network, or are convolutions or recurrent - partially using output from previous iterations of applying the model as further input to produce results for the current input.

A machine learning model can be trained with supervised learning, where the training data includes images of known objects, known people, and/or any contextual factors as input and a desired output, such as a prediction of an object and/or person. A current image of an object and/or person can be provided to the model. Output from the model can be compared to the desired output for that object type, and, based on the comparison, the model can be modified, such as by changing weights between nodes of the neural network or parameters of the functions used at each node in the neural network (e.g., applying a loss function). After applying each of the factors in the training data and modifying the model in this manner, the model can be trained to evaluate new input data.

Some implementations of the multi-state display control system can include a deep learning component. A "deep learning model," as used herein with respect to object recognition and/or facial recognition, refers to a construct trained to learn by example to perform classification directly from images. The deep learning model is trained by using a large set of labeled data and applying a neural network as described above that includes many layers. With respect to object recognition and/or facial recognition from images, the deep learning model in some implementations can be a convolutional neural network (CNN) that is used to automatically learn an object or face's inherent features to identify the object or person. For example, the deep learning model can be an R-CNN, Fast R-CNN, or Faster-RCNN. In some implementations, object recognition can be performed using other object recognition approaches, such as template matching, image segmentation and blob analysis, edge matching, divide-and-conquer search, greyscale matching, gradient matching, pose clustering, geometric hashing, scale-invariant feature transform (SIFT), histogram of oriented gradients (HOG), region-based fully convolutional network (R-FCN), single shot detector (SSD), spatial pyramid pooling (SPP-net), etc.

Figure 7 is a flow diagram illustrating a process 700 used in some implementations of the present technology for selectively controlling one or more peripheral multi-state panels on a head-worn display. In some implementations, process 700 can be performed as a response to activation or donning of the head-worn display. In some implementations, process 700 can be performed as a response to launching of an application providing instructions and/or making application programming interface (API) calls to the head-worn display. In some implementations, process 700 can be performed when it is determined that the head-worn display has sufficient power, e.g., that the battery is charged higher than a threshold amount, e.g., 50%.

In some implementations, process 700 can be performed by the head-worn display having one or more integral processing components, and/or by one or more external processing components in operable communication with the head-worn display. The head-worn display can be, for example, an artificial reality (XR) head-mounted display (HMD), such as HMD 200 of Figure 2A and/or HMD 252 of Figure 2B. In some implementations, one or more processors controlling the one or more multi-state panels can be separate from one or more processors controlling an XR environment renderable on the XR device. In some implementations, process 700 can be performed by multi-state display control system 164 of Figure 1.

At block 702, process 700 can provide a view of an XR environment to a user via a head-worn display. In some implementations, the XR environment can be a fully computer-generated, immersive virtual reality (VR) environment. The head-worn display can include one or more multi-state panels (e.g., dimming panels) on the periphery of the primary XR display, i.e., surrounding the primary XR display on one or more edges by one or more predetermined distances, thereby extending the displayable area. In some implementations, the one or more multi-state panels can be positioned as shown in Figure 2A. The one or more multi-state panels can be similar in functionality as those described with respect to Figure 5. The primary XR display can display the XR environment including, e.g., one or more virtual objects, while the one or more multi-state panels can merely dim or scatter ambient light and/or applied backlighting on its periphery.

At block 704, process 700 can determine whether one or more virtual objects is positioned in the periphery, and/or have moved off the primary XR display and into the periphery, where at least one of the one or more multi-state panels is located. Process 700 can determine whether a virtual object is positioned within and/or has moved onto the periphery by, for example, receiving and analyzing rendering data, virtual object data, XR application data, etc., indicating the position of the virtual object in the XR environment and/or on the primary XR display. If process 700 determines at block 704 that a virtual object is not positioned and/or has not moved onto the periphery, process 700 can return to block 702, and continue providing a view of the XR environment to the user on the primary XR display.

If process 700 determines at block 704 that a virtual object has moved onto the periphery at block 704, process 700 can proceed to block 706. At block 706, process 700 can select an area of the one or more multi-state panels to dim. In some implementations, process 700 can select the area to dim based on the location of where and to what degree the virtual object is positioned and/or has moved onto the periphery. For example, if the virtual object is positioned and/or has moved off of the primary XR display on the left side, process 700 can select at least a portion of a multi-state panel on the left side of the XR display to dim. In some implementations, the area selected to dim can correspond to the size, shape, etc., of the virtual object. In some implementations, the area selected to dim can change over time as the virtual object moves relative to the user, e.g., based on movement of the virtual object, movement of the user, the user looking around, etc. In some implementations, the area selected to dim can be at the boundary of a multi-state panel and the primary XR display, such that, e.g., part of the virtual object is rendered on the primary XR display, and part of the virtual object is dimmed on one or more multi-state panels at block 708.

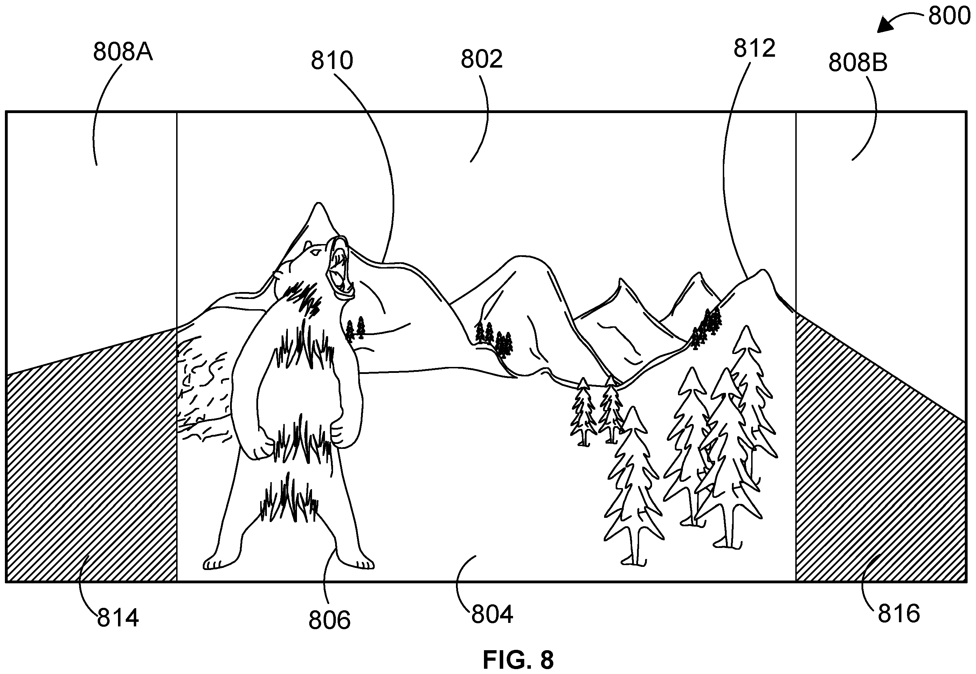

At block 708, process 700 can dim at least one of the one or more multi-state panels in the selected area. In some implementations, process 700 can dim the selected area by controlling the electric current being applied to at least one pixel within the array of pixels. Thus, at least a portion of the peripheral view on the head-worn display can be dimmed corresponding to an area where the virtual object is located. An exemplary view on a head-worn display of a selectively dimmed multi-state panel based on virtual objects in the periphery is shown and described herein with respect to Figure 8.

Figure 8 is a conceptual diagram illustrating an example view 800 on an artificial reality (XR) device of a rendered virtual reality (VR) environment 804 including selectively dimmed virtual objects. View 800 can include VR environment rendered on a primary XR display screen 802, as well as two multi-state panels 808A-808B on the left and right periphery of primary XR display screen 802, respectively, which can display white backlight and/or ambient light when not dimmed. VR environment can include virtual objects such as virtual bear 806, virtual mountain 810, and virtual mountain 812. As shown in example view 800A, virtual mountain 810 can be positioned such that it extends beyond primary XR display screen 802 into the periphery and onto multi-state panel 808A, and virtual mountain 812 can be positioned such that it extends beyond primary XR display screen 802 into the periphery and onto multi-state panel 808B. Multi-state panels 808A-808B can be selectively dimmed in areas 814, 816 corresponding to the positions of virtual mountains 810, 812, respectively, extending off of primary XR display screen 802 and onto multi-state panels 808A-808B. Thus, multi-state panels 808A-808B can extend and augment the XR experience beyond primary XR display screen 802 in a manner that is less computationally expensive and requires less power than employing a larger XR display screen 802. Although shown and described in Figure 8 as including multi-state panels 808A-808B, it is contemplated that multi-state panels 808-808B can alternatively be another type of multi-state panel described herein.

Several implementations of the disclosed technology are described above in reference to the figures. The computing devices on which the described technology may be implemented can include one or more central processing units, memory, input devices (e.g., keyboard and pointing devices), output devices (e.g., display devices), storage devices (e.g., disk drives), and network devices (e.g., network interfaces). The memory and storage devices are computer-readable storage media that can store instructions that implement at least portions of the described technology. In addition, the data structures and message structures can be stored or transmitted via a data transmission medium, such as a signal on a communications link. Various communications links can be used, such as the Internet, a local area network, a wide area network, or a point-to-point dial-up connection. Thus, computer-readable media can comprise computer-readable storage media (e.g., "non-transitory" media) and computer-readable transmission media.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

## Claims

1. A method for selectively controlling one or more pixelated multi-state panels on a head-worn display, the method comprising:
providing a pass-through view of a real-world environment to a user through
lenses of the head-worn display,
wherein the lenses are at least partially covered by the one or more pixelated multi-state panels,
wherein the one or more pixelated multi-state panels are configured to have at least a partially transparent state,
wherein the one or more pixelated multi-state panels each include an array of pixels, and
wherein each pixel, within the array of pixels, is independently controllable for brightness based on application of an electric current;
identifying a contextual trigger; and
based on the identified contextual trigger, selectively dimming light by at least one of the one or more pixelated multi-state panels by controlling the electric current being applied to a set of pixels within the array of pixels, thereby dimming light in at least a portion of the pass-through view of the real-world environment on the head-worn display.

2. The method of claim 1, wherein identifying the contextual trigger includes identifying an object, in the real-world environment, by applying object recognition to one or more images, of the real-world environment, captured by the head-worn display; and preferably
wherein the at least one of the one or more multi-state panels is selectively dimmed relative to a location of the identified object in the real-world environment as viewed on the head-worn display.

3. The method of claim 1 or claim 2, further comprising:
providing a signal to the at least one of one or more pixelated multi-state panels that causes the set of pixels, corresponding to a location determined for the user to gaze at, to activate.

4. The method of any preceding claim,
wherein the head-worn display is an artificial reality head-mounted display configured to apply lighting effects to the lenses to render an artificial reality environment, and
wherein the selectively dimming light at the at least one of the one or more pixelated multi-state panels is further based on deactivation of the lighting effects applied to the lenses by the artificial reality head-mounted display.

5. The method of any preceding claim,
wherein the head-worn display is configured to communicate over a network via a communications interface, and the contextual trigger is a notification received by the head-worn display over the network via the communications interface; and/or
wherein the contextual trigger is a matching of an audio signal, captured by the head-worn display, to a defined audio pattern; and/or
wherein the contextual trigger is a gaze of a user dwelling at a location in the real-world environment for at least a threshold amount of time, and the selectively dimmed light indicates the location.

6. The method of any preceding claim,
wherein the one or more pixelated multi-state panels are pixelated dimming panels,
wherein identifying the contextual trigger includes identifying an area of brightness, on the head-worn display, above a threshold, and
wherein the selectively dimming the light in at least the portion of the pass-through view includes dimming the identified area of brightness.

7. The method of any preceding claim, wherein the head-worn display is an artificial reality head-mounted display including a primary display, configured to render an artificial reality environment to the lenses, the primary display being at least partially covered by the one or more multi-state panels.

8. The method of any preceding claim, further comprising:
mapping the identified contextual trigger to a user interface element,
wherein the selectively dimming light in at least the portion of the pass-through view includes the user interface element.

9. A computer-readable storage medium storing instructions that, when executed by a computing system, cause the computing system to perform a process for controlling one or more pixelated multi-state panels on a head-worn display, the process comprising:
providing a view of an artificial reality environment to a user through lenses of
the head-worn display,
wherein the lenses are at least partially covered by the one or more pixelated multi-state panels,
wherein the one or more pixelated multi-state panels are configured to have at least a partially transparent state,
wherein the one or more pixelated multi-state panels each include an array of pixels, and
wherein each pixel, within the array of pixels, is independently controllable for brightness based on application of an electric current;
identifying a contextual trigger; and
based on the identified contextual trigger, selectively dimming at least one of the one or more pixelated multi-state panels by controlling the electric current being applied to a set of pixels within the array of pixels, thereby dimming at least a portion of the view of the artificial reality environment on the head-worn display.

10. The computer-readable storage medium of claim 9, wherein the artificial reality environment is a virtual reality environment; and/or
wherein the view of the artificial reality environment includes one or more virtual objects overlaid on a real-world environment.

11. A computing system for controlling one or more multi-state panels on a head-worn display, the computing system comprising:
one or more processors; and
one or more memories storing instructions that, when executed by the one or more processors, cause the computing system to perform a process comprising:
providing a view of an environment to a user through lenses of the head-worn display,
wherein the environment is a real-world environment or an artificial reality environment,
wherein the lenses are at least partially covered by the one or more multi-state panels,
wherein the one or more multi-state panels are configured to have at least a partially transparent state,
wherein the one or more multi-state panels each include an array of pixels, and
wherein each pixel, within the array of pixels, is independently controllable for brightness based on application of an electric current;
identifying a contextual trigger; and
based on the identified contextual trigger, selectively modifying light by at least one of the one or more multi-state panels by controlling the electric current being applied to at least one pixel within the array of pixels, thereby modifying light in at least a portion of the view of the environment on the head-worn display.

12. The computing system of claim 11,
wherein the environment is the artificial reality environment, and
wherein the head-worn display is an artificial reality head-mounted display configured to apply lighting effects to the lenses to render the artificial reality environment, and the selectively modifying the light by the at least one of the one or more multi-state panels is further based on deactivation of the lighting effects applied to the lenses by the artificial reality head-mounted display; or
wherein the head-worn display is an artificial reality head-mounted display including a primary display, configured to render an artificial reality environment to the lenses, the primary display being at least partially covered by the one or more multi-state panels.

13. The computing system of claim 11 or 12,
wherein the head-worn display is configured to communicate over a network via a communications interface; and
wherein the contextual trigger is a notification received by the head-worn display over the network via the communications interface.

14. The computing system of any one of claims 11 to 13, wherein the one or more multi-state panels are liquid crystal panels.

15. The computing system of any one of claims 11 to 14, wherein the process further comprises:
mapping the identified contextual trigger to a user interface element,
wherein the modified at least the portion of the view of the environment includes the user interface element.
